# EUROPÄISCHE PATENTSCHRIFT

(11) **EP 3 712 552 B1**
(45) Veröffentlichungstag und Bekanntmachung des Hinweises auf die Patenterteilung: **10.03.2021**
(21) Anmeldenummer: 19216879.7
(22) Anmeldetag: 17.12.2019
(51) Int. Cl.: G01B 5/20, G01B 21/04, B23F 23/12, B24B 19/00, B24B 49/02

(54) **VERFAHREN ZUM KALIBRIEREN EINES MESSTASTERS IN EINER VERZAHNMASCHINE**
METHOD FOR CALIBRATING A TOUCH PROBE IN A GEAR CUTTING MACHINE
PROCÉDÉ D'ÉTALONNAGE D'UN PALPEUR DE MESURE DANS UNE MACHINE À TAILLER LES ENGRENAGES

(30) Priorität: 26.02.2019 DE 102019104891
(43) Veröffentlichungstag der Anmeldung: 23.09.2020
(73) Patentinhaber: Liebherr-Verzahntechnik GmbH, 87437 Kempten (DE)
(72) Erfinder: van Hauth, Johannes, 87435 Kempten (DE)
(74) Vertreter: Behr, Wolfgang

(56) Entgegenhaltungen:
- EP-B1- 2 016 370
- EP-B1- 2 554 938
- DE-A1-102013 003 585
- JP-A- 2013 011 443
- US-A1- 2013 139 660

## Beschreibung

Die Erfindung betrifft ein Verfahren zur Kalibrierung eines Messtasters in einer Verzahnmaschine unter Zuhilfenahme eines Werkstücks, insbesondere eines Zahnrades.

Bei Verzahnmaschinen, bei denen ein Messtaster eingebaut ist, um die hergestellten Werkstücke in der Maschine prüfen zu können, (z.B.: Zahndickenprüfung, Teilungsprüfung, Profilprüfung, Flankenlinienprüfung) kann es durch äußere Einflüsse wie Temperaturschwankungen zu minimalen Verformungen in der Maschine kommen, die diese Prüfungen unpräzise werden lassen. Die daraus resultierenden Änderungen der Position des Messtasters relativ zur Verzahnung (im folgenden nur Position des Messtasters genannt) müssen deshalb regelmäßig ermittelt und durch Kalibrierung ausgeglichen werden, um gleichbleibend gute Prüfergebnisse gewährleisten zu können.

Die Differenz der angenommenen und der tatsächlichen Position des Messtasters wird hier als Positionsfehler bezeichnet. Ist der Positionsfehler null, so ist der Messtaster perfekt kalibriert. Die mit dem erfindungsgemäß beschriebenen Verfahren bestimmte Korrektur der Position des Messtasters wird als Positionskorrektur bezeichnet.

Die zur Kalibrierung notwendige Ermittlung der Position des Messtasters kann an einem Messobjekt wie bspw. einem Messblock durchgeführt werden. Die Ermittlung direkt an einem in der Maschine eingespannten Werkstück, insbesondere einem Zahnrad, ist allerdings mit Vorteilen verbunden. Insbesondere entfällt der Aufwand für den Werker, einen Messblock in die Maschine einzubringen und nach der Kalibrierung wieder zu entfernen. Bei Verzahnmaschinen zum Fertigen großer Werkstücke kann es auch möglich sein, dass die Verfahrwege für den Messtaster nicht ausreichen, um einen Messblock erreichen zu können. Auch dies wird durch eine Messung am Werkstück vermieden.

Aus Druckschrift EP 2 554 938 B1 ist ein Verfahren zur Kalibrierung eines Messtasters in einer Verzahnmaschine unter Zuhilfenahme eines Werkstücks bekannt, bei welchem das Profil des Werkstücks zweimal durch unterschiedliche Messschritte bestimmt wird. Bei dem ersten Messschritt wird der Messtaster in eine tangentiale Richtung verfahren, während das Werkstück gedreht wird, bei dem zweiten Messschritt dagegen in eine nicht-tangentiale Richtung, bspw. radial. Anhand einer Differenz zwischen den jeweiligen Messschritten bestimmten Zahnprofilgradientenfehlern wird ein Positionsfehler des Messkopfes ermittelt und zur Kalibrierung herangezogen.

Aufgabe der vorliegenden Erfindung ist es, ein verbessertes Verfahren zur Kalibrierung eines Messtasters in einer Verzahnmaschine unter Zuhilfenahme eines Werkstücks zur Verfügung zu stellen.

Diese Aufgabe wird in einem ersten Aspekt durch ein Verfahren gemäß Anspruch 1 und in einem zweiten Aspekt durch ein Verfahren gemäß Anspruch 2 gelöst.

Bevorzugte Ausgestaltungen der vorliegenden Erfindung sind Gegenstand der abhängigen Ansprüche.

Die vorliegende Erfindung umfasst in einem ersten Aspekt ein Verfahren zum Kalibrieren eines Messtasters in einer Verzahnmaschine unter Verwendung eines in einer Werkstückaufnahme der Verzahnmaschine aufgenommenen Werkstücks, wobei der Messtaster eine Messtasterspitze aufweist, welche beweglich an einer Messtasterbasis angeordnet ist, wobei die Auslenkung der Messtasterspitze relativ zur Messtasterbasis über mindestens einen Sensor des Messtasters bestimmbar ist, und wobei der Messtaster über mindestens zwei Bewegungsachsen der Verzahnmaschine relativ zur Werkstückaufnahme verfahrbar ist,
wobei das Verfahren folgende Schritte umfasst:
- Verfahren von Messtaster und/oder Werkstück in eine Relativposition, in welcher die Messtasterspitze eine Zahnflanke des Werkstücks berührt;
- Drehen des Werkstücks über eine Drehachse der Werkstückaufnahme und Verfahren des Messtasters über die mindestens zwei Bewegungsachsen der Verzahnmaschine so, dass
   - der Berührpunkt der Messtasterspitze auf der Zahnflanke bei perfekter Kalibrierung unverändert bleiben würde und
   - die Auslenkung oder der Betrag der Auslenkung der Messtasterspitze bei perfekter Kalibrierung mindestens einen vorgegebenen Wert einnehmen und/oder beibehalten würde;
- Bestimmen einer Abweichung der Auslenkung der Messtasterspitze von dem mindestens einen vorgegebenen Wert an mindestens einem Messpunkt;
- Bestimmen mindestens eines Korrekturwertes der Kalibrierung auf Grundlage der Abweichung.

Gemäß einem zweiten Aspekt umfasst die vorliegenden Erfindung ein Verfahren zum Kalibrieren eines Messtasters in einer Verzahnmaschine unter Verwendung eines in einer Werkstückaufnahme der Verzahnmaschine aufgenommenen Werkstücks, wobei der Messtaster eine Messtasterspitze aufweist, welche beweglich an einer Messtasterbasis angeordnet ist, wobei die Auslenkung der Messtasterspitze relativ zur Messtasterbasis und/oder das Erreichen einer Auslenkung der Messtasterspitze relativ zur Messtasterbasis über mindestens einen Sensor des Messtasters bestimmbar ist, und wobei der Messtaster über mindestens zwei Bewegungsachsen der Verzahnmaschine relativ zur Werkstückaufnahme verfahrbar ist,
wobei das Verfahren folgende Schritte umfasst:
- Verfahren von Messtaster und/oder Werkstück in eine Relativposition, in welcher die Messtasterspitze die Zahnflanke des Werkstücks berührt;
- Drehen des Werkstücks über eine Drehachse der Werkstückaufnahme und Verfahren des Messtasters über die mindestens zwei Bewegungsachsen der Verzahnmaschine so, dass
   - der Berührpunkt der Messtasterspitze auf der Zahnflanke bei perfekter Kalibrierung unverändert bleiben würde, und
   - die Auslenkung oder der Betrag der Auslenkung der Messtasterspitze mindestens einen vorgegebenen Wert einnimmt und/oder beibehält;
- Bestimmen einer Abweichung zwischen der tatsächlichen Stellung der Drehachse der Werkstückaufnahme und/oder der mindestens zwei Bewegungsachsen der Verzahnmaschine von einer Stellung, welche diese bei perfekter Kalibrierung aufweisen würden, an mindestens einem Messpunkt; und
- Bestimmen mindestens eines Korrekturwertes der Kalibrierung auf Grundlage der Abweichung.

Bei beiden Aspekten gemäß der vorliegenden Erfindung werden anders als in der EP 2 554 938 B1 keine Profilwinkel und/oder Profilwinkelabweichungen gemessen. Weiterhin wird auch keine Bewegung der Messtasterspitze tangential an den Grundkreis durchgeführt. Vielmehr bewegt sich der Mittelpunkt der Messtasterspitze (ggf. bis auf die gemessenen Abweichungen) auf einer Kreisbahn. Hierdurch wird ein erheblich einfacheres Verfahren zur Verfügung gestellt, welches zudem eine umfassendere Kalibrierung erlaubt.

Bevorzugte Ausgestaltungen sowohl des Verfahrens gemäß dem ersten Aspekt, als auch gemäß dem zweiten Aspekt, werden im Folgenden näher beschrieben. Soweit nicht anderes angegeben ist, können die bevorzugten Ausgestaltungen zur Weiterbildung beider Aspekte zum Einsatz kommen.

Bevorzugt kommt die vorliegende Erfindung ohne ein Referenzobjekt wie einen Referenz-Messblock aus, d. h. die Kalibrierung wird ausschließlich über das verzahnte Werkstück vorgenommen.

Die Verzahnung des Werkstücks kann beliebig gewählt werden. Insbesondere kann die Verzahnung des Werkstücks eine gerade oder eine schrägverzahnte Innenoder Außenverzahnung sein, welche sowohl zylindrisch als auch konisch (Beveloidverzahnung) ausgeführt sein kann. Die Verzahnung kann sowohl symmetrisch als auch asymmetrisch sein, d.h. die Profilwinkel der linken und rechten Flanke können, müssen aber nicht unterschiedlich sein. Das Profil der Verzahnung kann beliebig gewählt werden, insbesondere auch als Evolvente.

Die erfindungsgemäße Kalibriermethode wird bevorzugt vollautomatisch in einem Fertigungszyklus ausgeführt.

Bei dem Verfahren gemäß dem ersten Aspekt wird ein Messtaster verwendet, der in der Lage ist, die Auslenkung der Messtasterspitze an eine Steuerung zu liefern, d. h. zum scannenden Messen geeignet ist.

Zur Durchführung eines Verfahrens gemäß dem zweiten Aspekt kann dagegen auch ein Messtaster eingesetzt werden, der lediglich das Erreichen einer bestimmten Auslenkung der Messtasterspitze relativ zur Messtasterbasis ausgeben kann, d.h. nur zum schaltenden Messen geeignet ist.

Erfindungsgemäß können Messtaster eingesetzt werden, welche nur den Betrag der Auslenkung (bei schaltenden Tastern: welche nur ausgeben können, ob Kontakt besteht) ausgeben können. Es können jedoch auch Messtaster eingesetzt werden, welche zusätzlich noch die Kipprichtung ausgeben können. Diese Information wird jedoch nicht zwingend benötigt.

Gemäß einer möglichen Ausgestaltung der vorliegenden Erfindung wird die Abweichung für eine Mehrzahl von Messpunkten bestimmt und der mindestens eine Korrekturwert auf Grundlage der Mehrzahl von Abweichungen bestimmt. Insbesondere kann eine Kurve der Abweichungen über mehrere Messpunkte bestimmt werden.

Gemäß einer möglichen Ausgestaltung der vorliegenden Erfindung wird die Abweichung und/oder die Kurve der Abweichungen mit einer Mehrzahl von für unterschiedliche Kalibrierfehler bestimmten theoretischen Abweichungen und/oder theoretischen Kurven der Abweichungen verglichen, um den mindestens einen Korrekturwert der Kalibrierung zu bestimmen.

Gemäß einer möglichen Ausgestaltung der vorliegenden Erfindung wird in mindestens einem ersten Messdurchgang eine Abweichung in Kontakt mit einer ersten Flanke des Werkstücks und in mindestens einem zweiten Messdurchgang eine Abweichung in Kontakt mit einer zweiten, bevorzugt gegenüberliegenden Flanke des Werkstücks bestimmt. Bevorzugt wird die Abweichung für beide Flanken jeweils an mehreren Messpunkten bestimmt. Durch die Messung auf zwei Flanken stehen zusätzliche Informationen für die Kalibrierung zur Verfügung.

Gemäß einer möglichen Ausgestaltung der vorliegenden Erfindung werden für mindestens zwei Bewegungsrichtungen und/oder Bewegungsachsen Korrekturwerte bestimmt, wobei die Bewegungsrichtungen und/oder Bewegungsachsen bevorzugt eine Bewegung in einer Ebene senkrecht zur Drehachse der Werkstückaufnahme erlauben. Bevorzugt werden hierfür mindestens zwei Messdurchgänge durchgeführt, bei welchen jeweils die Abweichung bestimmt wird.

Gegenüber dem Stand der Technik ergibt sich der Vorteil, dass mit zwei Messungen nicht nur ein Fehler in einer ersten Richtung, sondern auch noch ein Fehler in einer zweiten Richtung korrigiert werden kann. Die beiden Kalibrierungsbahnen sind dabei bevorzugt auf 2 unterschiedlichen Flankenseiten angeordnet.

Gemäß einer möglichen Ausgestaltung der vorliegenden Erfindung erfolgt das Drehen des Werkstücks über die Drehachse der Werkstückaufnahme und das Verfahren des Messtasters über die mindestens zwei Bewegungsachsen der Verzahnmaschine gleichzeitig und/oder kontinuierlich. Insbesondere kann ein solches Vorgehen dann zum Einsatz kommen, wenn der Messtaster die Auslenkung der Messtasterspitze relativ zur Messtasterbasis ausgeben kann.

Gemäß einer anderen möglichen Ausgestaltung der vorliegenden Erfindung erfolgt das Drehen des Werkstücks über die Drehachse der Werkstückaufnahme und das Verfahren des Messtasters über die mindestens zwei Bewegungsachsen der Verzahnmaschine abwechselnd und/oder intermittierend. Ein solches Verfahren kommt bevorzugt dann zum Einsatz, wenn der Messtaster lediglich das Erreichen einer Auslenkung der Messtasterspitze relativ zur Messtasterbasis ausgeben kann, d.h. nur zum schaltenden Messen geeignet ist.

Gemäß einer möglichen Ausgestaltung der vorliegenden Erfindung wird durch Abfahren der zu prüfenden Flanke eine Änderung des Aufmaßes auf der Flanke und/oder das Profil der Flanke bestimmt, um vorab einen Berührpunkt für die Kalibrierung auszuwählen und/oder um die Änderung des Aufmaßes und/oder das Profil um den Berührpunkt herum bei der Bestimmung des Korrekturwerts zu berücksichtigen. Insbesondere kann dabei ein Berührpunkt gewählt werden, in welchem die Änderung des Aufmaßes auf der Flanke möglichst gering ist, so dass die Abweichungen von einer Sollgeometrie, welche den Berechnungen zugrunde gelegt wird, möglichst gering ist.

Gemäß einer möglichen Ausgestaltung der vorliegenden Erfindung wird in Abhängigkeit von einem Profil des Werkstücks und/oder Beschränkungen der Verzahnmaschine und/oder des Messtasters ein Radius, auf welchem der Berührpunkt liegt, und/oder ein Drehwinkelbereich der Drehachse der Werkstückaufnahme, welcher abgefahren wird, bestimmt. Insbesondere erfolgt die Bestimmung so, dass die Messung über einen möglichst großen Drehwinkelbereich und/oder mit einer vorgegebenen Genauigkeit erfolgen kann.

Gemäß einer möglichen Ausgestaltung der vorliegenden Erfindung weist die Messtasterspitze die Form einer Kugel auf.

Gemäß einer möglichen Ausgestaltung der vorliegenden Erfindung umfasst die Verzahnmaschine einen Bearbeitungskopf, welcher über die mindestens zwei Bewegungsachsen relativ zur Werkstückaufnahme verfahrbar ist, wobei an dem Bearbeitungskopf der Messtaster und eine Werkzeugaufnahme angeordnet sind. Die Bewegungsachsen des Bearbeitungskopfes können daher auch zum Verfahren des Messtasters eingesetzt werden.

In einer möglichen Ausgestaltung der vorliegenden Erfindung kann der Messtaster jedoch auch ganz oder teilweise über andere Bewegungsachsen verfahrbar sein als der Bearbeitungskopf mit der Werkzeugaufnahme.

Gemäß einer möglichen Ausgestaltung der vorliegenden Erfindung handelt es sich bei den mindestens zwei Bewegungsachsen um Linearachsen. Bevorzugt erlauben diese eine Bewegung in einer Ebene, welche senkrecht auf der Drehachse der Werkstückaufnahme steht. Bevorzugt werden durch das erfindungsgemäße Verfahren beide Bewegungsachsen kalibriert.

Die vorliegende Erfindung umfasst weiterhin eine Verzahnmaschine gemäß Anspruch 14, mit einer Werkstückaufnahme zur Aufnahme eines Werkstücks und mit einem Messtaster, wobei der Messtaster eine Messtasterspitze aufweist, welche beweglich an einer Messtasterbasis angeordnet ist, wobei die Auslenkung der Messtasterspitze relativ zur Messtasterbasis und/oder das Erreichen einer Auslenkung der Messtasterspitze relativ zur Messtasterbasis über mindestens einen Sensor des Messtasters bestimmbar ist, und wobei der Messtaster über mindestens zwei Bewegungsachsen der Verzahnmaschine relativ zur Werkstückaufnahme verfahrbar ist. Die Verzahnmaschine weist eine Steuerung auf, welche konfiguriert ist, den Messtaster über ein Verfahren, wie es oben beschrieben wurde, zu kalibrieren.

Insbesondere weist die Steuerung einen Mikroprozessor und einen nicht-flüchtigen Speicher auf, in welchem ein Programm abgelegt ist. Läuft das Programm auf dem Mikroprozessor ab, so führt die Verzahnmaschine das erfindungsgemäße Verfahren durch. Die Steuerung kann hierfür die Bewegungsachsen der Verzahnmaschine ansteuern und/oder Signale und/oder Messdaten des Messtasters auswerten.

Gemäß einer möglichen Ausgestaltung der vorliegenden Erfindung ist die Steuerung so konfiguriert, dass das Verfahren vollautomatisch als Teil eines Fertigungszyklus ausgeführt wird.

Die vorliegende Erfindung wird nun anhand von Figuren und Ausführungsbeispielen näher beschrieben.

Dabei zeigen:
- Fig.1:: eine Prinzipdarstellung eines Ausführungsbeispiels des erfindungsgemäßen Verfahrens, wobei die Kreisbahn dargestellt ist, auf der der Berührpunkt zwischen Messtasterspitze und Zahnflanke bei Drehung der Werkstückdrehachse und synchronem Verfahren des Messtasters verlaufen soll,
- Fig.2:: ein Beispiel für einen gemessenen (21) und einen berechneten (22) Verlauf der Aufzeichnung der Tasterauslenkung bei einer Kalibrierungsmessung an der linken Flanke abgetragen über den Werkstückdrehwinkel,
- Fig.3:: ein Beispiel für einen gemessenen (31) und einen berechneten (32) Verlauf der Aufzeichnung der Tasterauslenkung bei einer Kalibrierungsmessung an der rechten Flanke abgetragen über den Werkstückdrehwinkel,

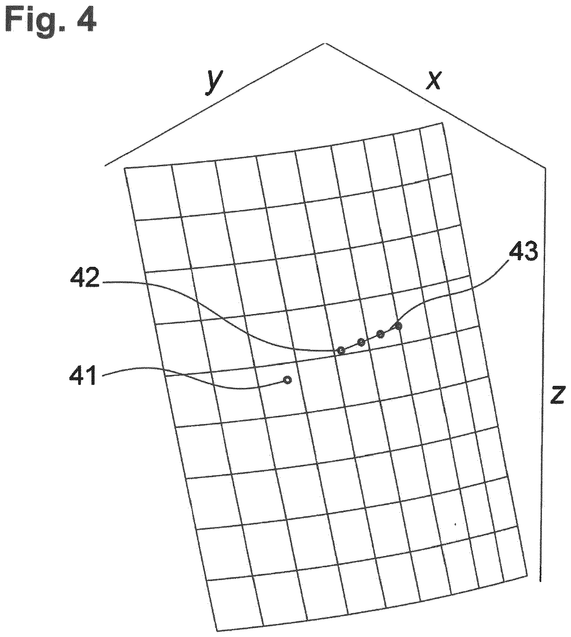

- Fig. 4:: eine Prinzipdarstellung des berechneten Berührpunkts (41) und des tatsächlichen Verlaufs des Berührpunkts bei vorhandenem Positionsfehler (43) der Messtasterspitze mit der Zahnflanke,
- Fig.5:: eine Prinzipdarstellung einer Kette von Transformationen (51-54) zur Berechnung der Position des Messtasters,
- Fig.6:: ein Ausführungsbeispiel für den Aufbau und die Funktionsweise eines Messtasters,
- Fig. 7: ein Ausführungsbeispiel für den Aufbau und die Funktionsweise einer erfindungsgemäßen Verzahnmaschine und
- Fig. 8: ein Ausführungsbeispiel für einen in einer Verzahnmaschine eingesetzten Bearbeitungskopf mit einem Messtaster.

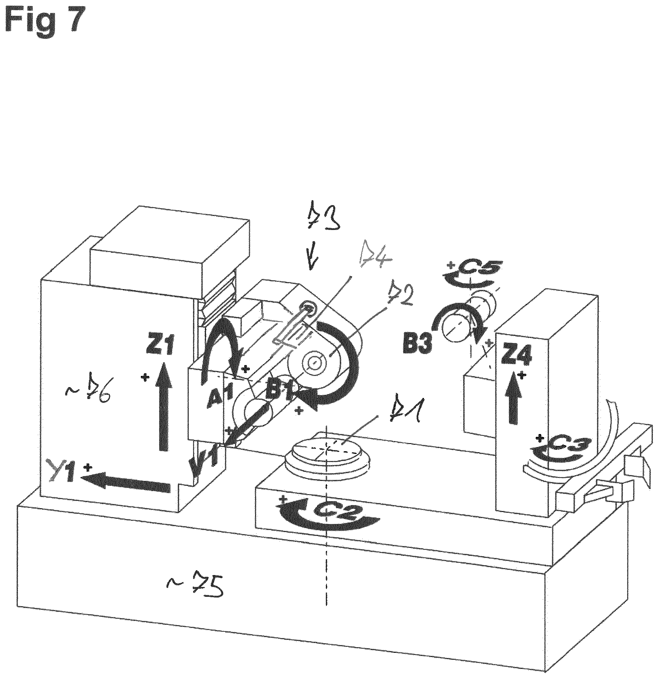

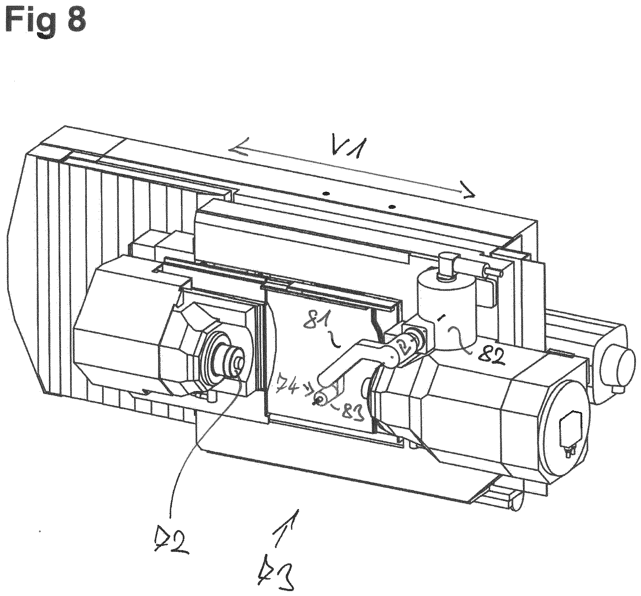

Ein Ausführungsbeispiel für den Aufbau und die Funktionsweise einer erfindungsgemäßen Verzahnmaschine ist in Fig. 7 gezeigt. Fig. 8 zeigt ein Ausführungsbeispiel für einen in der Verzahnmaschine einsetzbaren Bearbeitungskopf 73 mit einem Messtaster 74.

Die Verzahnmaschine umfasst im Ausführungsbeispiel eine Werkstückaufnahme 71 und eine Werkzeugaufnahme 72. Die Werkstück- und Werkzeugaufnahmen sind über entsprechende Antriebe um ihre Drehachsen C2 bzw. B1 antreibbar.

Die Werkzeugaufnahme ist an einem Bearbeitungskopf 73 angeordnet, welcher über Bewegungsachsen relativ zur Werkstückaufnahme verfahrbar ist. Im Ausführungsbeispiel ist eine erste Linearachse Y1 vorgesehen, über welche die Werkzeugaufnahme 72 in einer Richtung, welche senkrecht auf der Drehachse C2 der Werkstückaufnahme steht, verfahrbar ist, um den Achsabstand zu verändern. Weiterhin ist eine zweite Linearachse Z1 vorgesehen, über welche die Werkzeugaufnahme 72 in einer Richtung, welche parallel zur Drehachse C2 der Werkstückaufnahme verläuft, verfahrbar ist. Weiterhin ist eine dritte Linearachse V1 vorgesehen, über welche die Werkzeugaufnahme 72 in einer Richtung parallel zu ihrer eigenen Drehachse B1 verfahrbar ist. Die Ausrichtung der der Linearachse V1 und der Werkzeugaufnahme 72 kann über eine Schwenkachse A1 verändert werden, welche parallel zur Y1-Achse verläuft.

Die Werkstückaufnahme 71 ist im Ausführungsbeispiel auf einem Werkzeugtisch 75 angeordnet. Der Werkzeugtisch 75 trägt einen Werkzeugständer 76, welcher mittels der Y1-Achse linear verfahrbar ist. An dem Werkzeugständer ist ein über die Achse Z1 verfahrbarer Schlitten angeordnet, an welchem über die A1-Achse und die V1-Achse der Bearbeitungskopf mit der Werkzeugaufnahme 72 angeordnet ist.

Bei der Verzahnmaschine kann es sich beispielsweise um eine Wälzfräsmaschine und/oder Wälzschleifmaschine handeln. Die vorliegende Erfindung ist jedoch auch für beliebige andere Verzahnmaschinen einsetzbar.

Fig. 8 zeigt ein Ausführungsbeispiel für den Bearbeitungskopf 73. An diesem ist ein Messtaster 74 angeordnet. Dieser weist eine Messtasterbasis 83 auf, wobei die Auslenkung einer Messtasterspitze des Messtasters 74 relativ zur Messtasterbasis 83 über mindestens einen Sensor bestimmbar ist.

Der Messtaster 74 ist über die Messtasterbasis 83 an einem Schwenkarm 81 angeordnet, welcher über einen Antrieb 82 aus einer Ruheposition in eine Messposition und zurück verschwenkbar ist.

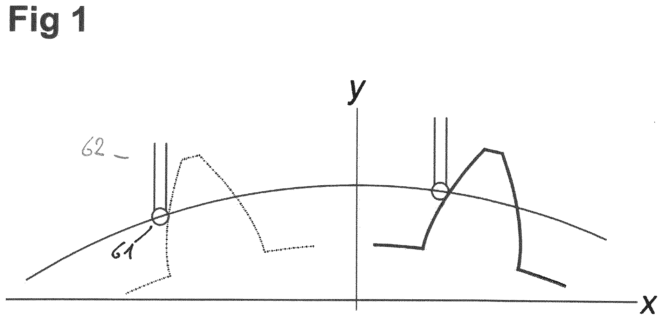

Die im Rahmen der vorliegenden Beschreibung gewählte Definition der Richtungen X, Y und Z kann auch der Figur 1 entnommen werden, wobei Z orthogonal zu X und Y steht, sodass die drei Achsen ein Rechtssystem bilden. Die Z-Achse verläuft parallel zu der Drehachse der Verzahnung (Werkstückdrehachse). Die C-Achse bezeichnet hier eine Drehachse der Werkstückaufnahme, welche das Werkstück um die Werkstückdrehachse dreht. Die X-, Y- und Z-Achsen bezeichnen Maschineachsen, die den Messtaster relativ zur Verzahnung in den Richtungen X, Y und Z verfahren. Dabei müssen die Achsen nicht notwendigerweise physikalische Achsen sein. So können die Bewegungen auch durch Interpolation zweier oder mehrere Achsen realisiert werden.

Insbesondere kann eine Bewegung in Y-Richtung im Ausführungsbeispiel über die Y1-Richtung realisiert werden, eine Bewegung in X-Richtung im Ausführungsbeispiel bei einer Stellung der A1-Achse, in welcher die V1-Achse parallel zur X-Richtung ist, über die V1-Achse allein, und in anderen Stellungen durch eine Überlagerung von Bewegungen der V1-Achse und der Z1-Achse. In alternativen Ausgestaltungen der Verzahnmaschine kann jedoch auch eine X1-Achse vorgesehen sein, welche immer parallel zur X-Richtung ausgerichtet ist, bspw. indem die X1-Achse die A1-Achse trägt und durch diese daher nicht verschwenkt wird.

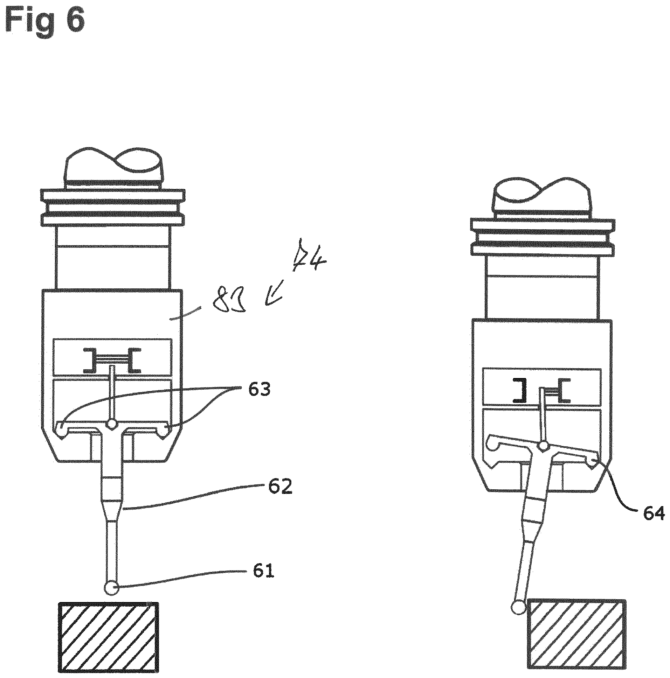

Die Messtasterspitze 61 am Ende des Taststifts 62 des Messtasters 74 ist vorzugsweise eine Kugel (Messtasterkugel), bspw. eine Rubinkugel. Figur 6 zeigt den Aufbau einer möglichen Variante eines hier einsetzbaren scannenden Messtasters.

Verwendet wird bei dem erfindungsgemäßen Verfahren vorzugsweise ein Messtaster, der zum scannenden Messen geeignet ist. D.h. ein Messtaster, der in der Lage ist, die Auslenkung des Taststiftes und/oder der Messtasterspitze an eine Steuerung zu liefern. Eine Variante der Erfindung sieht auch vor, stattdessen einen Messtaster einzusetzen, der lediglich zum schaltenden Messen geeignet ist. Des Weiteren können Messtaster dadurch unterschieden werden, ob diese nur den Betrag der Auslenkung (bei schaltenden Tastern: ob diese nur ausgeben können, ob Kontakt besteht,) oder auch noch die Kipprichtung ausgeben können. Das hier vorgestellte Verfahren kann auch mit Messtastern durchgeführt werden, die nicht die Kipprichtung ausgeben können. Das Verfahren wird im Folgenden für einen solchen Messtaster beschrieben.

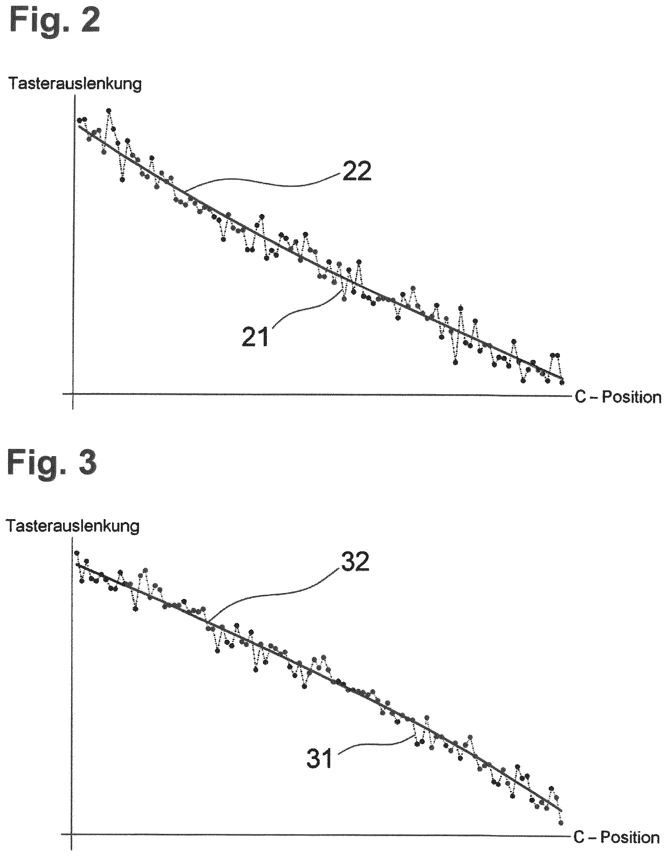

Der grundsätzliche Ablauf des Verfahrens erfolgt in einem ersten Ausführungsbeispiel wie folgt:
- Man fährt die Messtasterspitze in eine Lücke der Verzahnung an eine vorgegebene Tiefe (z.B.: Mitte des Profils).
- Dann dreht man die C-Achse (Werkstückdrehachse) bis der Taststift die gewünschte Auslenkung erreicht, also vorzugsweise so, dass er die Hälfte der möglichen Auslenkung erreicht hat. Diese Situation ist in Figur 1 rechts gezeigt.
- Dann dreht man die C-Achse kontinuierlich und verfährt die X-, Y-, und Z-Achse synchron so, dass falls perfekt kalibriert wäre, der Berührpunkt der Messtasterspitze auf der Zahnflanke und auch der Betrag der Tasterauslenkung gleichbleibt, siehe Figur 1. Der Berührpunkt zwischen Messtasterspitze und Verzahnung bewegt sich dabei auf einer Kreisbahn, deren Mittelpunkt auf der Drehachse der Verzahnung liegt.
- Während dieser Drehung zeichnet man die Auslenkung des Taststifts über den C-Drehwinkel an mehreren, insbesondere an möglichst vielen diskreten Punkten auf.
- Diesen Vorgang wiederholt man für die andere Flankenseite, so dass man eine Auslenkungsaufzeichnung für einen Punkt auf einer linken Flanke und eine Auslenkungsaufzeichnung für einen Punkt auf einer rechten Flanke hat. Beispiele für solche Aufzeichnungen sind sieht man in Figur 2 für die linke Flanke (Kurve 21) und in Figur 3 für die rechte Flanke (Kurve 31).
- Falls perfekt kalibriert ist und sowohl der Messtaster als auch die Maschinenachsen keine Ungenauigkeiten haben, sind die aufgezeichneten Auslenkungen des Tasters für alle C-Positionen für die beiden Flanken je konstant bei der jeweiligen Start-Tasterauslenkung. Der Berührpunkt der Messtasterspitze mit den beiden Flanken bleibt dabei unverändert.
- Falls nicht perfekt kalibriert ist, entspricht der tatsächliche Berührpunkt der Messtasterspitze auf der Flanke zu Beginn der Messung (42) nicht dem berechneten Berührpunkt (41). Dadurch wird der berechnete C-Winkel, der am Beginn der Messung angenommen wurde, wenn die gewünschte Auslenkung des Taststifts erreicht wird, nicht exakt erreicht. Außerdem verändern sich beim Verfahren der berechneten Kinematikbahnen (43) die Auslenkung des Taststifts und der Berührpunkt auf der Flanke. Wenn man die Auslenkung des Taststifts über die C-Position aufträgt, erhält man je eine Kurve für beide Flanken. Diese Kurven werden im folgenden Auslenkungskurven genannt und sind in Fig. 2 für die linke Flanke und in Fig. 3 für die rechte Flanke beispielhaft wiedergegeben. Im Allgemeinen sind diese aufgezeichneten Auslenkungskurven mit einem gewissen Rauschen versehen, welches sich aus einer Ungenauigkeit des Messtasters und der Maschinenachsen ergibt.
- Unter Zuhilfenahme der berechneten Achsbahnen und einer Kette von Koordinatentransformationen kann man errechnen und/oder simulieren, wie die Auslenkungskurven für einen vorgegebenen Fehler in X- und in Y-Richtung und für vorgegebene Winkelabweichungen der beiden C-Startposition aussehen. Hierbei verwendet man die zuvor berechneten X-, Y- und Z- Positionen und addiert den Fehler in X- und in Y-Richtung. Außerdem addiert man je für beide Bahnen eine C-Winkelkorretur. Dann berechnet man die Auslenkung des Taststifts unter Zuhilfenahme einer entsprechenden Koordinatentransformation. Dabei ist auch der Berührpunkt unbekannt. Auf diese Weise erhält man eine Kurvenschar für die Auslenkung auf der linken und rechten Flanke, wobei der Fehler in X- und Y-Richtung sowie die C-Winkelkorrekturen auf linker und rechter Flanke die freien Parameter dieser Kurvenschar sind.
- Man verwendet eine Norm, die den Abstand angibt, wie weit die errechneten Auslenkungskurven [22/32] für die linke und rechte Flanke von den aufgezeichneten Auslenkungskurven [21/31] für rechte und linke Flanke entfernt sind. Als Norm kann zum Beispiel die Lp-Norm (bzw. eine diskretisierte Form davon) eingesetzt werden. Durch Anwendung einer Ausgleichsrechnung lassen sich so die Auslenkungskurven für linke und rechte Flanke aus der Kurvenschar (und somit auch die Fehler in X- und Y-Richtung) finden, welche die aufgezeichneten Auslenkungskurven am besten annähern.
- Dazu sucht man das Minimum dieser Norm bei Variation des vorgegebenen Fehlers in X- und Y-Richtung und der C-Winkelkorrekturen. Dies kann über ein numerisches Optimierungsverfahren (z.B.: ein Gradientenverfahren oder ein Newton-Verfahren mit diskreten Ableitungen) realisiert werden. In Figur 2 und Figur 3 sind in den Kurven 22 und 32 diejenigen Kurven aus der Kurvenschar gezeichnet, bei denen dieses Minimum erreicht ist.
- Wenn keine Tasterungenauigkeiten vorhanden sind und das Zahnrad in der Umgebung um die Berührpunkte der rechten und linken Flanke exakt gefertigt ist, entspricht der berechnete Fehler in X- und Y-Richtung dem negativen der gewünschten Positionskorrektur, also den Korrekturwerten zur Kalibrierung des Messtasters.

Alternativ könnte an Stelle einer über den Messvorgang konstanten Start-Tasterauslenkung, welche der Berechnung der durchgeführten Bewegungen zugrunde gelegt wird, auch ein vorgegebener Verlauf der Tasterauslenkung eingesetzt werden.

In einem zweiten Ausführungsbeispiel kann dagegen auch ein Messtaster verwendet werden, der einen der lediglich zum schaltenden Messen geeignet ist, d.h. es der Messtaster schaltet ab einer fest vorgegebenen Auslenkung vom Zustand "kein Kontakt" auf den Zustand "Kontakt".
Mit einem solchen Messtaster kann ähnlich zu dem vorher beschriebenen Verfahren vorgegangen werden:
- Man verändert in kleinen Schritten abwechselnd die Position der Messtasterspitze und dreht dann das Werkstück nach, bis Kontakt hergestellt ist.
- Die Positionsänderung der Messtasterspitze wird über ein Verfahren der X-, Y- und Z-Achse so realisiert, dass falls perfekt kalibriert wäre, der Berührpunkt der Messtasterspitze auf der Zahnflanke gleichbleibt, wenn man die Werkstückdrehachse um eine fest vorgegebene Winkeldifferenz dreht. Die Berechnung hierfür geht analog zu der obigen Beschreibung.
- Wenn nicht perfekt kalibriert ist, entspricht die vorgegebene Winkeldifferenz nicht der gefahrenen Winkeldifferenz, bis der Taster Kontakt hat. Der Unterschied dieser Winkeldifferenzen wird für eine Messung auf der linken Flanke und eine Messung auf der rechten Flanke über die C-Position aufgezeichnet.
- Nun kann eine Kurvenschar für die Winkeldifferenzen abhängig vom Fehler in der X- und der Y-Position und der C-Winkelkorrekturen bei ersten Kontakt auf linker und rechter Flanke simuliert werden. Daraus bestimmt man die Parameter, sodass ein Minimum zur gemessenen Winkeldifferenzaufzeichnung erreicht wird. Hieraus wird wiederum der Korrekturwert bestimmt.

Alternativ könnte auch abwechselnd das Werkstück gedreht und dann die Position der Messtasterspitze nachgeführt werden, bis Kontakt hergestellt ist. In diesem Fall können die Positionen des Tasters, in welchen dieser Kontakt hat, aufgezeichnet und ausgewertet werden.

Bei beiden Varianten des erfindungsgemäßen Verfahrens sind folgende weiteren Aspekte zu beachten:
Der Bereich der C-Positionen, der bei der Kalibrierung verwenden kann, ist durch die folgenden Faktoren eingeschränkt:
- Für einen vorgegeben C-Winkel kann der Winkel a_NT zwischen der Normalen auf die Zahnflanke am Berührpunkt des der Messtasterspitze und dem Taststift berechnet werden. Wenn a_NT 90° überschreitet, kann es zu Kollisionen des Taststifts und der Flanke, an der die Kalibrierung durchgeführt wird, kommen. Es gibt abhängig vom Messtaster eine untere Grenze für a_NT, ab der die Messung unpräzise wird. Aus den Grenzen des Bereichs für a_NT können Grenzen für den C-Bereich berechnet werden.
- Es kann Einschränkungen geben, wie weit der Messtaster in X-Richtung für eine konkrete Maschine verfahren werden kann. Dadurch ergeben sich Einschränkungen, wie weit die C-Achse gedreht werden kann.
- Es kann vorkommen, dass der Taststift mit der der Messung gegenüberliegenden Zahnflanke kollidiert. Der C-Bereich ist also so zu wählen, dass dies nicht passiert.

Alle oben erwähnten Einschränkungen für den C-Bereich der Kalibrierung hängen davon ab, wie man die Tiefe und/oder den Radius vorgibt, auf der der Berührpunkt zwischen Zahnflanke und Messtasterspitze liegt. Je größer der bei der Kalibrierung überfahrene C-Bereich, desto geringer machen sich Tasterungenauigkeiten in der Positionskorrektur bemerkbar. Es kann also ein Schritt vor die Kinematikberechnung geschaltet werden, bei dem man berechnet, für welchen Radius der C-Bereich am größten ist, und so einen geeigneten Radius auswählt.

Bei der Bestimmung, wie die Auslenkungskurven für einen vorgegebenen Fehler in X- und in Y-Richtung und für vorgegebene Winkelabweichungen der beiden C-Startposition aussehen, berechnet man auch, wie sich der Berührpunkt auf der Flanke verändert (43), und muss dabei davon ausgehen, dass die gegebene Verzahnung exakt gefertigt ist. Je größer der Positionsfehler ist, desto größer ist die Bewegung des Berührpunkts der Messtasterspitze mit der Flanke. Je präziser die Verzahnung in der Umgebung um den berechneten Berührpunkt gefertigt ist, desto besser ist die berechnete Kalibrierungskorrektur.

In einer möglichen Ausgestaltung kann daher in einem vorgeschalteten Schritt durch Abfahren der Flanke oder des Profils der zu prüfenden Flanke eine Stelle gesucht werden, in der die Änderung des Aufmaßes auf die Flanke in einer kleinen Umgebung um den Messpunkt auf der Flanke möglichst klein sind.

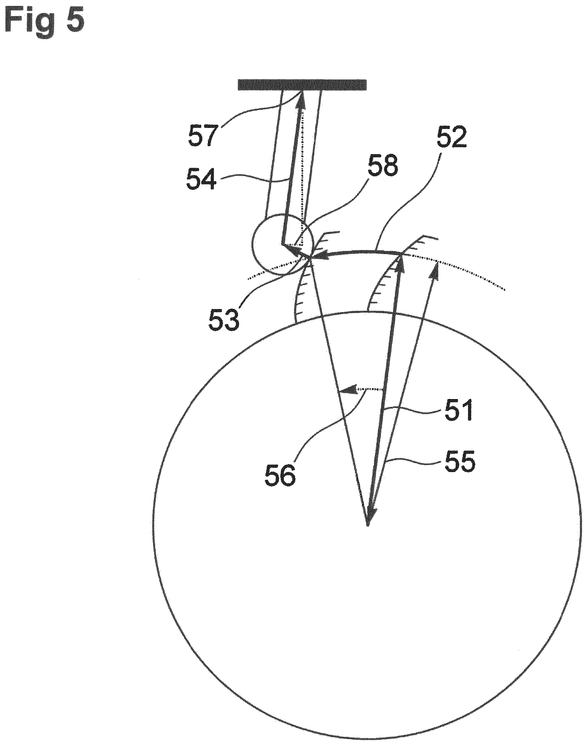

Abhängig von der Art der Verzahnung und vom Aufbau des Messtasters können dessen Veränderung der beweglichen Teile durch eine Kette von Koordinatentransformationen (51-54) abgebildet werden, wie dies in Fig. 5 dargestellt ist:
- Abhängig von Verzahnungsart und dem gewünschten Radius (55) auf dem gemessen werden soll, wird der Berührpunkt des Messtasters bestimmt. (Zum Beispiel über die Gleichung einer Kreisevolvente) (Transformation 51)
- In Abhängigkeit der C-Position (56) wird der Berührpunkt verdreht. (Transformation 52)
- Vom Berührpunkt gelangt man durch eine Verschiebung um den Radius der Messtasterspitze in Richtung des Normalenvektors auf die Zahnflanke in den Mittelpunkt der Messtasterspitze. (Transformation 53)
- Abhängig vom Aufbau des Messtasters kann bestimmt werden, wie die X-, Y-, und Z-Achse, an denen der Messtaster montiert ist (57), zu verfahren sind, dass die Auslenkung des Taststifts (58) die gewünschte Auslenkung und die Messtasterspitze die gewünschte Position hat. (Transformation 54)
   Eine genauere Betrachtung wird nun für einen konkreten, in Fig. 6 dargestellten Messtasters vorgenommen:
   Der Taststift (62) liegt auf einer Planverzahnung (63) auf. Bei einer Auslenkung des Taststifts kippt die Planverzahnung auf der der Berührung abgeneigten Seite nach oben (Siehe Figur 6, rechtes Bild). Die Ebene, in der dieses Kippen stattfindet, wird im Folgenden als Rückschnellebene bezeichnet. Im rechten Bild von Figur 6 ist diese die Bildebene. Der Drehpunkt (64) und die Ausrichtung der Rückschnellebne hängen von der Richtung der Auslenkung ab.

Die zugehörige Transformation setzt sich aus einer Verschiebung vom Messkugelmittelpunkt zum kipprichtungsabhängigen Drehpunkt und einer weiteren Verschiebung zur Mitte der Planverzahnung (Montagepunkt des Taststifts) zusammen.

Der Messtaster ist so aufgebaut, dass eine Feder den Taststift immer zurückdrückt, dass dieser möglichst wenig ausgelenkt ist. Daraus folgt die Zusatzbedingung, dass der Normalenvektor auf der abgetasteten Fläche am Berührpunkt senkrecht auf dem Normalenvektor der Rückschnellebene steht.

Daraus ergibt sich eine weitere Gleichung, die sowohl beim Berechnen der Kinematikbahn, als auch bei der Berechnung der Auslenkung für einen gegebenen Positionsfehler gelöst werden muss.

Bei der Berechnung der Kinematikbahnen hat man somit für jede C-Position 4 Gleichungen (3 Gleicheichungen von den Koordinatentransformationen und die Zusatzbedingung) und die 4 Unbekannten: X-, Y- und Z-Position und Kipprichtung.

Bei der Berechnung der Auslenkung für einen gegebenen Positionsfehler hat man für jede C-Position dieselben 4 Gleichungen und löst nach den zwei Oberflächenparametrisierungskoordinaten des Berührpunktes auf der Zahnflanke, der Kipprichtung und der Auslenkung des Taststifts.

## Patentansprüche

1. Verfahren zum Kalibrieren eines Messtasters in einer Verzahnmaschine unter Verwendung eines in einer Werkstückaufnahme der Verzahnmaschine aufgenommenen Werkstücks, wobei der Messtaster eine Messtasterspitze aufweist, welche beweglich an einer Messtasterbasis angeordnet ist, wobei die Auslenkung der Messtasterspitze relativ zur Messtasterbasis über mindestens einen Sensor des Messtasters bestimmbar ist, und wobei der Messtaster über mindestens zwei Bewegungsachsen der Verzahnmaschine relativ zur Werkstückaufnahme verfahrbar ist,
wobei das Verfahren folgende Schritte umfasst:
- Verfahren von Messtaster und/oder Werkstück in eine Relativposition, in welcher die Messtasterspitze eine Zahnflanke des Werkstücks berührt;
- Drehen des Werkstücks über eine Drehachse der Werkstückaufnahme und Verfahren des Messtasters über die mindestens zwei Bewegungsachsen der Verzahnmaschine so, dass
- der Berührpunkt der Messtasterspitze auf der Zahnflanke bei perfekter Kalibrierung unverändert bleiben würde und
- die Auslenkung oder der Betrag der Auslenkung der Messtasterspitze bei perfekter Kalibrierung mindestens einen vorgegebenen Wert einnehmen und/oder beibehalten würde;
- Bestimmen einer Abweichung der Auslenkung der Messtasterspitze von dem mindestens einen vorgegebenen Wert an mindestens einem Messpunkt;
- Bestimmen mindestens eines Korrekturwertes der Kalibrierung auf Grundlage der Abweichung.

2. Verfahren zum Kalibrieren eines Messtasters in einer Verzahnmaschine unter Verwendung eines in einer Werkstückaufnahme der Verzahnmaschine aufgenommenen Werkstücks, wobei der Messtaster eine Messtasterspitze aufweist, welche beweglich an einer Messtasterbasis angeordnet ist, wobei die Auslenkung der Messtasterspitze relativ zur Messtasterbasis und/oder das Erreichen einer Auslenkung der Messtasterspitze relativ zur Messtasterbasis über mindestens einen Sensor des Messtasters bestimmbar ist, und wobei der Messtaster über mindestens zwei Bewegungsachsen der Verzahnmaschine relativ zur Werkstückaufnahme verfahrbar ist,
wobei das Verfahren folgende Schritte umfasst:
- Verfahren von Messtaster und/oder Werkstück in eine Relativposition, in welcher die Messtasterspitze die Zahnflanke des Werkstücks berührt;
- Drehen des Werkstücks über eine Drehachse der Werkstückaufnahme und Verfahren des Messtasters über die mindestens zwei Bewegungsachsen der Verzahnmaschine so, dass
- der Berührpunkt der Messtasterspitze auf der Zahnflanke bei perfekter Kalibrierung unverändert bleiben würde, und
- die Auslenkung oder der Betrag der Auslenkung der Messtasterspitze mindestens einen vorgegebenen Wert einnimmt und/oder beibehält;
- Bestimmen einer Abweichung zwischen der tatsächlichen Stellung der Drehachse der Werkstückaufnahme und/oder der mindestens zwei Bewegungsachsen der Verzahnmaschine von einer Stellung, welche diese bei perfekter Kalibrierung aufweisen würden, an mindestens einem Messpunkt; und
- Bestimmen mindestens eines Korrekturwertes der Kalibrierung auf Grundlage der Abweichung.

3. Verfahren nach Anspruch 1 oder 2, wobei die Abweichung für eine Mehrzahl von Messpunkten bestimmt und der mindestens eine Korrekturwert auf Grundlage der Mehrzahl von Abweichungen bestimmt wird, wobei bevorzugt eine Kurve der Abweichungen über mehrere Messpunkte bestimmt wird.

4. Verfahren nach einem der vorangegangenen Ansprüche, wobei die Abweichung und/oder die Kurve der Abweichungen mit einer Mehrzahl von für unterschiedliche Kalibrierfehler bestimmten theoretischen Abweichungen und/oder theoretischen Kurven der Abweichungen verglichen wird, um den mindestens einen Korrekturwert der Kalibrierung zu bestimmen.

5. Verfahren nach einem der vorangegangenen Ansprüche, wobei in mindestens einem ersten Messdurchgang eine Abweichung in Kontakt mit einer ersten Flanke des Werkstücks und in mindestens einem zweiten Messdurchgang eine Abweichung in Kontakt mit einer zweiten, bevorzugt gegenüberliegenden Flanke des Werkstücks bestimmt wird.

6. Verfahren nach einem der vorangegangenen Ansprüche, wobei für mindestens zwei Bewegungsrichtungen und/oder Bewegungsachsen Korrekturwerte bestimmt werden, wobei die Bewegungsrichtungen und/oder Bewegungsachsen bevorzugt eine Bewegung in einer Ebene senkrecht zur Drehachse der Werkstückaufnahme erlauben.

7. Verfahren nach einem der vorangegangenen Ansprüche, wobei das Drehen des Werkstücks über die Drehachse der Werkstückaufnahme und das Verfahren des Messtasters über die mindestens zwei Bewegungsachsen der Verzahnmaschine gleichzeitig und/oder kontinuierlich erfolgt.

8. Verfahren nach einem der Ansprüche 1-6, wobei das Drehen des Werkstücks über die Drehachse der Werkstückaufnahme und das Verfahren des Messtasters über die mindestens zwei Bewegungsachsen der Verzahnmaschine abwechselnd und/oder intermittierend erfolgt.

9. Verfahren nach einem der vorangegangenen Ansprüche, wobei durch Abfahren der zu prüfenden Flanke eine Änderung des Aufmaßes auf der Flanke und/oder das Profil der Flanke bestimmt wird, um vorab einen Berührpunkt für die Kalibrierung auszuwählen und/oder um die Änderung des Aufmaßes und/oder das Profil um den Berührpunkt herum bei der Bestimmung des Korrekturwerts zu berücksichtigen.

10. Verfahren nach einem der vorangegangenen Ansprüche, wobei in Abhängigkeit von einem Profil des Werkstücks und/oder Beschränkungen der Verzahnmaschine und/oder des Messtasters ein Radius, auf welchem der Berührpunkt liegt, und/oder ein Drehwinkelbereich der Drehachse der Werkstückaufnahme, welcher abgefahren wird, bestimmt wird.

11. Verfahren nach einem der vorangegangenen Ansprüche, wobei die Messtasterspitze die Form einer Kugel aufweist.

12. Verfahren nach einem der vorangegangenen Ansprüche, wobei die Verzahnmaschine einen Bearbeitungskopf aufweist, welcher über die mindestens zwei Bewegungsachsen relativ zur Werkstückaufnahme verfahrbar ist, wobei an dem Bearbeitungskopf der Messtaster und eine Werkzeugaufnahme angeordnet sind.

13. Verfahren nach einem der vorangegangenen Ansprüche, wobei es sich bei den mindestens zwei Bewegungsachsen um Linearachsen handelt.

14. Verzahnmaschine mit einer Werkstückaufnahme zur Aufnahme eines Werkstücks und mit einem Messtaster, wobei die Werkstückaufnahme eine Drehachse aufweist, und wobei der Messtaster eine Messtasterspitze aufweist, welche beweglich an einer Messtasterbasis angeordnet ist, wobei die Auslenkung der Messtasterspitze relativ zur Messtasterbasis und/oder das Erreichen einer Auslenkung der Messtasterspitze relativ zur Messtasterbasis über mindestens einen Sensor des Messtasters bestimmbar ist, und wobei der Messtaster über mindestens zwei Bewegungsachsen der Verzahnmaschine relativ zur Werkstückaufnahme verfahrbar ist,
**dadurch gekennzeichnet,**
**dass** die Verzahnmaschine eine Steuerung aufweist, welche konfiguriert ist, den Messtaster über ein Verfahren nach einem der vorangegangenen Ansprüche zu kalibrieren.

15. Verzahnmaschine nach Anspruch 14, wobei die Steuerung so konfiguriert ist, dass das Verfahren vollautomatisch als Teil eines Fertigungszyklus ausgeführt wird.

## Claims

1. Method for calibrating a measuring probe in a gear cutting machine by using a workpiece received in a workpiece holder of the gear cutting machine, wherein the measuring probe includes a measuring probe tip which is movably arranged on a measuring probe base, wherein the deflection of the measuring probe tip relative the measuring probe base can be determined via at least one sensor of the measuring probe, and wherein the measuring probe is traversable relative to the workpiece holder via at least two axes of movement of the gear cutting machine,
wherein the method comprises the following steps:
- traversing measuring probe and/or workpiece into a relative position in which the measuring probe tip touches a tooth flank of the workpiece;
- rotating the workpiece via an axis of rotation of the workpiece holder and traversing the measuring probe via the at least two axes of movement of the gear cutting machine such that
- the touch point of the measuring probe tip on the tooth flank would remain unchanged in the case of a perfect calibration, and
- the deflection or the amount of the deflection of the measuring probe tip would adopt and/or maintain at least one specified value in the case of a perfect calibration;
- determining a deviation of the deflection of the measuring probe tip from the at least one specified value at at least one measurement point;
- determining at least one correction value of the calibration on the basis of the deviation.

2. Method for calibrating a measuring probe in a gear cutting machine by using a workpiece received in a workpiece holder of the gear cutting machine, wherein the measuring probe includes a measuring probe tip which is movably arranged on a measuring probe base, wherein the deflection of the measuring probe tip relative the measuring probe base and/or the achievement of a deflection of the measuring probe tip relative to the measuring probe base can be determined via at least one sensor of the measuring probe, and wherein the measuring probe is traversable relative to the workpiece holder via at least two axes of movement of the gear cutting machine,
wherein the method comprises the following steps:
- traversing measuring probe and/or workpiece into a relative position in which the measuring probe tip touches the tooth flank of the workpiece;
- rotating the workpiece via an axis of rotation of the workpiece holder and traversing the measuring probe via the at least two axes of movement of the gear cutting machine such that
- the touch point of the measuring probe tip on the tooth flank would remain unchanged in the case of a perfect calibration, and
- the deflection or the amount of the deflection of the measuring probe tip adopts and/or maintains at least one specified value;
- determining a deviation between the actual position of the axis of rotation of the workpiece holder and/or the at least two axes of movement of the gear cutting machine from a position which the same would have in the case of a perfect calibration, at at least one measurement point; and
- determining at least one correction value of the calibration on the basis of the deviation.

3. Method according to claim 1 or 2, wherein the deviation is determined for a plurality of measurement points and the at least one correction value is determined on the basis of the plurality of deviations, wherein preferably a curve of the deviations is determined over a plurality of measurement points.

4. Method according to any of the preceding claims, wherein the deviation and/or the curve of the deviations is compared with a plurality of theoretical deviations determined for different calibration errors and/or theoretical curves of the deviations in order to determine at least one correction value of the calibration.

5. Method according to any of the preceding claims, wherein in at least one first measurement run a deviation in contact with a first flank of the workpiece and in at least one second measurement run a deviation in contact with a second, preferably opposite flank of the workpiece is determined.

6. Method according to any of the preceding claims, wherein correction values are determined for at least two directions of movement and/or axes of movement, wherein the directions of movement and/or axes of movement preferably allow a movement in a plane perpendicular to the axis of rotation of the workpiece holder.

7. Method according to any of the preceding claims, wherein rotating the workpiece is effected via the axis of rotation of the workpiece holder, and traversing the measuring probe is effected via the at least two axes of movement of the gear cutting machine at the same time and/or continuously.

8. Method according to one of claims 1 to 6, wherein rotating the workpiece is effected via the axis of rotation of the workpiece holder, and traversing the measuring probe is effected via the at least two axes of movement of the gear cutting machine alternately and/or intermittently.

9. Method according to any of the preceding claims, wherein a change in the allowance on the flank and/or the profile of the flank is determined by tracing the flank to be checked, in order to previously select a touch point for the calibration and/or to take account of the change in the allowance and/or of the profile around the touch point when determining the correction value.

10. Method according to any of the preceding claims, wherein in dependence on a profile of the workpiece and/or constraints of the gear cutting machine and/or the measuring probe a radius on which the touch point is located and/or a range of angles of rotation of the axis of rotation of the workpiece holder, which is traced, is determined.

11. Method according to any of the preceding claims, wherein the measuring probe tip has the shape of a sphere.

12. Method according to any of the preceding claims, wherein the gear cutting machine includes a machining head which is traversable relative to the workpiece holder via the at least two axes of movement, wherein the measuring probe and a tool holder are arranged on the machining head.

13. Method according to any of the preceding claims, wherein the at least two axes of movement are linear axes.

14. Gear cutting machine with a workpiece holder for receiving a workpiece and with a measuring probe, wherein the workpiece holder comprises an axis of rotation, and the measuring probe comprises a measuring probe tip which is movably arranged on a measuring probe base, wherein the deflection of the measuring probe tip relative the measuring probe base and/or the achievement of a deflection of the measuring probe tip relative to the measuring probe base can be determined via at least one sensor of the measuring probe, and wherein the measuring probe is traversable relative to the workpiece holder via at least two axes of movement of the gear cutting machine,
**characterized in**
**that** the gear cutting machine comprises a control unit which is configured to calibrate the measuring probe by a method according to any of the preceding claims.

15. Gear cutting machine according to claim 14, wherein the control unit is configured such that the method is executed fully automatically as part of a production cycle.

## Revendications

1. Procédé pour étalonner un palpeur de mesure dans une machine à tailler en développante en utilisant une pièce logée dans un logement de pièce de la machine à tailler en développante, dans lequel le palpeur de mesure présente une pointe de palpeur de mesure, laquelle est disposée de manière mobile au niveau d'une base de palpeur de mesure, dans lequel la déviation de la pointe de palpeur de mesure par rapport à la base de palpeur de mesure peut être définie par l'intermédiaire d'au moins un capteur du palpeur de mesure, et dans lequel le palpeur de mesure peut être déplacé par rapport au logement de pièce sur au moins deux axes de déplacement de la machine à tailler en développante, dans lequel le procédé comprend des étapes suivantes :
- de déplacement du palpeur de mesure et/ou de la pièce dans une position relative, dans laquelle la pointe de palpeur de mesure touche un flanc de dent de la pièce ;
- de rotation de la pièce par l'intermédiaire d'un axe de rotation du logement de pièce et de déplacement du palpeur de mesure sur les au moins deux axes de déplacement de la machine à tailler en développante telle sorte que
- le point de contact de la pointe de palpeur de mesure sur le flanc de dent resterait inchangé lors d'un étalonnage parfait et
- la déviation ou le montant de la déviation de la pointe de palpeur de mesure adopterait et/ou conserverait au moins une valeur prédéfinie lors d'un étalonnage parfait ;
- de définition d'un écart de la déviation de la pointe de palpeur de mesure d'au moins une valeur prédéfinie sur au moins un point de mesure ;
- de définition d'au moins une valeur de correction de l'étalonnage sur la base de l'écart.

2. Procédé pour étalonner un palpeur de mesure dans une machine à tailler en développante en utilisant une pièce logée dans un logement de pièce de la machine à tailler en développante, dans lequel le palpeur de mesure présente une pointe de palpeur de mesure, laquelle est disposée de manière mobile au niveau de la base de palpeur de mesure, dans lequel la déviation de la pointe de palpeur de mesure par rapport à la base de palpeur de mesure et/ou l'atteinte d'une déviation de la pointe de palpeur de mesure par rapport à la base de palpeur de mesure peuvent être définies par l'intermédiaire d'au moins un capteur du palpeur de mesure, et dans lequel le palpeur de mesure peut être déplacé par rapport au logement de pièce sur au moins deux axes de déplacement de la machine à tailler en développante,
dans lequel le procédé comprend des étapes suivantes :
- de déplacement du palpeur de mesure et/ou de la pièce dans une position relative, dans laquelle la pointe de palpeur de mesure touche le flanc de dent de la pièce ;
- de rotation de la pièce par l'intermédiaire d'un axe de rotation du logement de pièce et de déplacement du palpeur de mesure sur les au moins deux axes de déplacement de la machine à tailler en développante telle sorte
- que le point de contact de la pointe de palpeur de mesure sur le flanc de dent resterait inchangé lors d'un étalonnage parfait, et
- la déviation ou le montant de la déviation de la pointe de palpeur de mesure adopte et/ou conserve au moins une valeur prédéfinie ;
- de définition d'un écart entre la position réelle de l'axe de rotation du logement de pièce et/ou des au moins deux axes de déplacement de la machine à tailler en développante et une position, que celle-ci présenterait lors d'un étalonnage parfait, sur au moins un point de mesure ; et
- de définition d'au moins une valeur de correction de l'étalonnage sur la base de l'écart.

3. Procédé selon la revendication 1 ou 2, dans lequel l'écart est défini pour une multitude de points de mesure et l'au moins une valeur de correction est définie sur la base de la multitude d'écarts, dans lequel de manière préférée une courbe des écarts sur plusieurs points de mesure est définie.

4. Procédé selon l'une quelconque des revendications précédentes, dans lequel l'écart et/ou la courbe des écarts est comparé/comparée à une multitude d'écarts théoriques/de courbes théoriques des écarts définis pour différentes erreurs d'étalonnage afin de définir l'au moins une valeur de correction de l'étalonnage.

5. Procédé selon l'une quelconque des revendications précédentes, dans lequel lors d'au moins une première passe de mesure, un écart en contact avec un premier flanc de la pièce et lors d'au moins une deuxième passe de mesure, un écart en contact avec un deuxième flanc, de manière préférée opposé, de la pièce est défini.

6. Procédé selon l'une quelconque des revendications précédentes, dans lequel des valeurs de correction sont définies pour au moins deux directions de déplacement et/ou axes de déplacement, dans lequel les directions de déplacement et/ou axes de déplacement permettent de manière préférée un déplacement dans un plan de manière perpendiculaire par rapport à l'axe de rotation du logement de pièce.

7. Procédé selon l'une quelconque des revendications précédentes, dans lequel la rotation de la pièce sur l'axe de rotation du logement de pièce et le déplacement du palpeur de mesure sur les au moins deux axes de déplacement de la machine à tailler en développante sont effectués de manière simultanée et/ou en continu.

8. Procédé selon l'une quelconque des revendications 1 - 6, dans lequel la rotation de la pièce sur l'axe de rotation du logement de pièce et le déplacement du palpeur de mesure sur les au moins deux axes de déplacement de la machine à tailler en développante sont effectués en alternance et/ou par intermittence.

9. Procédé selon l'une quelconque des revendications précédentes, dans lequel une modification de la dimension sur le flanc et/ou le profil du flanc sont définis en parcourant le flanc à contrôler afin de choisir au préalable un point de contact pour l'étalonnage et/ou afin de tenir compte de la modification de la dimension et/ou du profil tout autour du point de contact lors de la définition de la valeur de correction.

10. Procédé selon l'une quelconque des revendications précédentes, dans lequel en fonction d'un profil de la pièce et/ou de restrictions de la machine à tailler en développante et/ou du palpeur de mesure, un rayon, sur lequel se situe le point de contact, et/ou une plage d'angles de rotation de l'axe de rotation du logement de pièce, laquelle est parcourue, sont définis.

11. Procédé selon l'une quelconque des revendications précédentes, dans lequel la pointe de palpeur de mesure présente la forme d'une bille.

12. Procédé selon l'une quelconque des revendications précédentes, dans lequel la machine à tailler en développante présente une tête d'usinage, laquelle peut être déplacée par rapport au logement de pièce sur les au moins deux axes de déplacement, dans lequel le palpeur de mesure et un logement d'outil sont disposés au niveau de la tête d'usinage.

13. Procédé selon l'une quelconque des revendications précédentes, dans lequel les au moins deux axes de déplacement sont des axes linéaires.

14. Machine à tailler en développante avec un logement de pièce pour loger une pièce et avec un palpeur de mesure, dans laquelle le logement de pièce présente un axe de rotation, et dans laquelle le palpeur de mesure présente une pointe de palpeur de mesure, laquelle est disposée de manière mobile au niveau d'une base de palpeur de mesure, dans laquelle la déviation de la pointe de palpeur de mesure par rapport à la base de palpeur de mesure et/ou l'atteinte d'une déviation de la pointe de palpeur de mesure par rapport à la base de palpeur de mesure peuvent être définies par l'intermédiaire d'au moins un capteur du palpeur de mesure, et dans laquelle le palpeur de mesure peut être déplacé par rapport au logement de pièce sur au moins deux axes de déplacement de la machine à tailler en développante,
**caractérisée en ce**
**que** la machine à tailler en développante présente une commande, laquelle est configurée pour étalonner le palpeur de mesure par l'intermédiaire d'un procédé selon l'une quelconque des revendications précédentes.

15. Machine à tailler en développante selon la revendication 14, dans laquelle la commande est configurée de telle sorte que le procédé est exécuté totalement automatiquement en tant que partie d'un cycle de production.
